# EUROPEAN PATENT SPECIFICATION

(11) **EP 1 995 015 B1**
(45) Date of publication and mention of the grant of the patent: **26.12.2012**
(21) Application number: 07736886.8
(22) Date of filing: 15.03.2007
(51) Int. Cl.: B23K 20/12, B21J 15/02, B23K 103/20

(54) **METHOD OF JOINING MATERIALS**
VERFAHREN ZUM VERBINDEN VON MATERIALIEN
PROCEDE POUR ASSEMBLER DES MATERIAUX

(30) Priority: 16.03.2006 JP 2006072697
(43) Date of publication of application: 26.11.2008
(73) Proprietor: Hino Motors, Ltd., Hino-shi, Tokyo 191-8660 (JP)
(72) Inventor: FUKUDA, Hiroshi, Hino-shi, Tokyo 191-8660 (JP)
(74) Representative: Köhler, Walter
(86) International application number: PCT/JP2007/000229
(87) International publication number: WO 2007/108208

(56) References cited:
- JP-A- 2000 141 066
- JP-A- 2003 266 183
- JP-A- 2003 266 184
- JP-A- 2004 106 037
- JP-A- 2006 316 964

## Description

### Technical Field

The present invention relates to methods for joining materials.

### Background Art

Recently, in the automobile industry, joining different kinds of materials such as aluminum and iron members which are hardly weldable together has become more and more important since lightweight material such as an aluminum member has been positively utilized from a viewpoint of making a vehicle light in weight for improvement of fuel efficiency. Conventionally, different kinds of materials hardly weldable together have been joined together by means of, for example, bolt-on fastening, joining through mechanical clinch or adhesion through adhesive agent.

A conventional technology pertinent for joining materials has been disclosed,for example, in JP2004-136365A.
JP 2003-266183 A on the figures 7-12 of which the preamble of claims 1 and 6 is based concerns the provision of enabling a friction stir welding method in which friction stir welding is possible for a hardly plastic flow material and the welding in combination of materials for which welding is usually impossible. According to JP 2003-266183 A members to be joined on one end are composed of hardly plastic flow materials, and a first and second recesses that assist the welding are formed on the joining surface. An intermediate member which is a member to be joined on the other end is composed of a material that is easily plastic-flowable. After the members to be joined on both ends are combined and set in a state prior to welding, the probe of the tool is pushed against the intermediate member for friction stirring. As a result, the material of the intermediate member is subjected to plastic flow along the recesses of the members to be joined, so that the members to be joined on both ends are firmly welded together.

### Summary of Invention

### Technical Problems

However, for example, use of bolt-on fastening brings abut projecting of a bolt and a nut on front-back both sides of the materials to be joined, which leads to a design restriction of ensuring occupation space required for these projections; moreover, in bolt-on fastening, there are fears on loosening and dropout. Use of joining through mechanical clinch may disadvantageously bring about quality defects such as cracks and deformation since the joining is conducted mainly for and between thin sheets and only through pressing with no addition of heat to the materials.

Use of adhesion through adhesive agent is disadvantageous not only in aggravated workability and working environment but also aggravated recyclability due to difficulty in separation of the adhesive agent from the materials upon recycling.

The invention was made in view of the above and has its object to provide a method for joining materials which is free from projections accompanying a design restriction as well as loosening and dropout, which enables joining of materials widely ranging from thinner sheets to thicker plates while preventing quality defects such as cracks and deformation from occurring and which can conduct joining with excellent recyclability while maintaining excellent workability and working environment.

### Solution to Problems

A first aspect of the invention is directed to a method for joining materials according to claim 1.

Thus, the mechanical engaging part provided by the auxiliary material tightly fitted into the joint holes with respect to the respective materials brings about anti-dropout and ant-rotation effects, whereby the respective materials are firmly joined together through the auxiliary material.

In this connection, no large projections such as bolt and nut are protruded unlike the bolt-on fastening, so that it is free from design restriction of ensuring occupation space required for such projections. The auxiliary material is tightly fitted into the joint holes, so that there is no fear of loosening and dropout unlike bolt-on fastening.

The respective materials are joined together through the auxiliary material fitted into the joint holes of the respective materials, which enables joining of the respective materials widely ranging from thinner sheets to thicker plates without unreasonable pressing force and with frictional heat applied to the auxiliary material by the joint tool to soften the auxiliary material, so that quality defects such as cracks and deformation can be prevented from occurring.

The respective materials are mechanically joined together through the engaging part without intermediate such as adhesive agent, so that the joining is free from aggravated workability and working environment unlike use of adhesive agent and has excellent recyclability since separation is readily performed upon recycling of the materials.

Advantageously, flanges are formed on axially opposite ends of the auxiliary material to pinchingly hold the respective materials in an overlapped direction may serve as engaging part, at least one of said flanges being formed upon immersion of the joint tool to be completed as engaging part.

According aspect of the invention is directed to a method for joining materials according to claim 6.

Advantageously the holes formed into the respective materials may be have aspot-like shape, the joint tool being aligned with the joint holes so as to conduct spot joining; alternatively, the holes formed into the respective materials may have a slot-like shape , the joint tool being moved longitudinally of the joint holes so as to conduct continuous joining.

### Advantageous Effects of Invention

A method for joining materials of the invention as mentioned above can exhibit various excellent effects and advantages. Because of no large projections such as a bolt and a nut being protruded unlike bolt-on fastening, a design restriction can be substantially relieved and there is no fear of loosening and dropout unlike bolt-on fastening. Moreover, joining is enabled for materials widely ranging from thinner sheets to thicker plates while preventing quality defects such as cracks and deformation from occurring. Joining with excellent recyclability can be conducted while maintaining excellent workability and working environment.

### Brief Description of Drawings

Fig. 1 is a sectional view showing an embodiment of the invention;
Fig. 2 is a sectional view showing the joint tool of Fig. 1 being lowered while rotated;
Fig. 3 is a sectional view showing the joint tool being further lowered from the state shown in Fig. 2;
Fig. 4 is a sectional view showing the joint tool lifted from the state shown in Fig. 3; and
Fig. 5 is a sectional view showing employment of the auxiliary material flanged at its upper end.

### Description of Embodiments

Embodiments of the invention will be described in conjunction with the drawings.

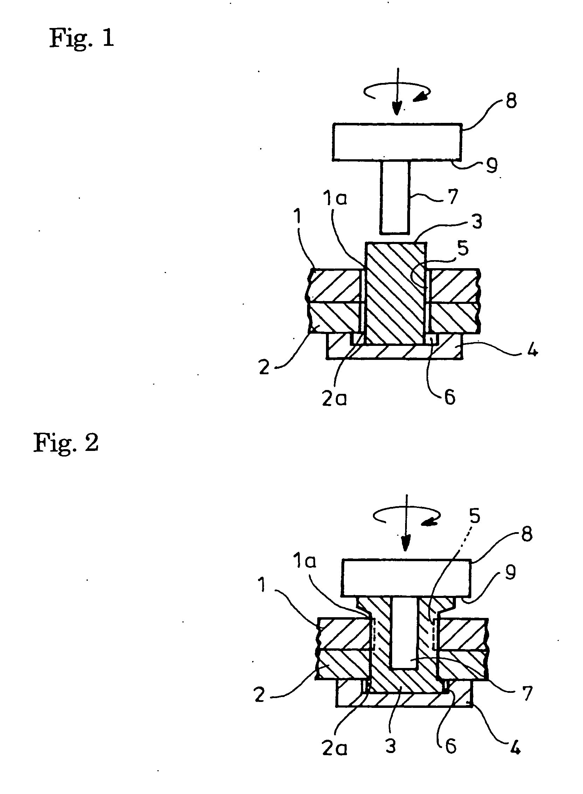

Figs. 1-4 show an embodiment of the invention which exemplifies spot joining of mutually overlapped iron and aluminum materials 1 and 2. As shown in Fig. 1, the materials 1 and 2 are formed with spot-like joint holes 1a and 2a extending through the materials in a direction of their thicknesses, respectively, and are overlapped with their joint holes 1a and 2a being aligned. Joint auxiliary material 3 made of aluminum is fitted into the aligned holes 1a and 2a and a backing member 4 is arranged underneath the overlapped materials 1 and 2.

An inner periphery of the joint hole 1a of the upper material 1 is threaded to provide a spiral groove 5. The backing member 4 has an upper surface formed with a concave 6 which confronts the joint holes 1a and 2a of the materials 1 and 2a and which has plane section greater than the joint holes 1a and 2a.

Arranged above the respective materials 1 and 2 and coaxially of the joint holes 1a and 2a is a cylindrical joint tool 8 with a pin 7 on its lower end adapted to be inserted into the joint holes 1a and 2a, the joint tool being supported rotatably and vertically movably by a joining device (not shown).

The overlapped materials 1 and 2 are joined together by the joint tool 8 which is lowered, while being rotated, to be pressed onto the auxiliary material 3 in the joint holes 1a and 2a as shown in Fig. 2. This causes the auxiliary material 3 to be softened in solid phase by frictional heat generated between the joint tool 8 and the auxiliary material 3 so that the pin 7 of the joint tool 8 is immersed into the auxiliary material 3.

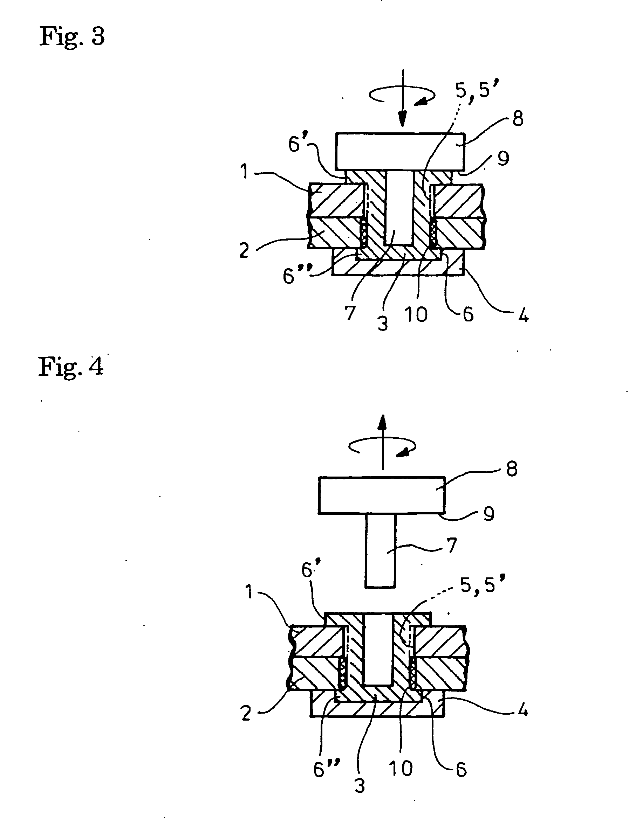

Then, the joint tool 8 is lowered into the state shown in Fig. 3 where the auxiliary material 3 softened by frictional heat is tightly fitted, due to plastic flow, into the joint holes 1a and 2a to provide a spiral (threaded) ridge 5' fitted with the groove 5, and is fitted with the concave 6 on the backing member 4 to provide a lower end of the auxiliary material 3 with a flange 6' which has plane section greater than the joint holes 1a and 2a, the auxiliary material 3 being projected into a gap between a shoulder 9 of the joint tool 8 around a base end of the pin 7 and an upper surface of the material 1 to provide an upper end of the auxiliary material 3 with a flange 6" which has plane section greater than the joint holes 1a and 2a. These ridge 5' and flanges 6' and 6" provide mechanical engaging parts with respect to the respective materials 1 and 2.

Moreover, especially in this embodiment, the lower material 2 is of the same kind as the auxiliary material 3, so that when the pin 7 of the joint tool 8 is rotated and immersed into the auxiliary material 3, a boundary between the material 2 and the auxiliary material 3 which are of the same kind is stirred by rotation of the joint tool 8 to provide a friction stir weld or joint 10.

Then, as shown in Fig. 4, the joint tool 8 is extracted upward and the ridge 5' and the flanges 6' and 6" and the friction stir weld 10 are allowed to harden. As a result, the ridge 5' and flanges 6' and 6" provided by the auxiliary material 3 with respect to the respective materials 1 and 2 bring about anti-dropout and anti-rotation effects, whereby the respective materials 1 and 2 are firmly joined together through the auxiliary material 3. Furthermore, the friction stir weld or joint 10 formed between the material 2 and the auxiliary material 3 further enhances the firm joining.

Moreover, afforded between the iron material 1 and the aluminum auxiliary material 3 is an effect of diffusion bonding or joint due to diffusion of atoms generated between them since the joint auxiliary material 3 softened in solid phase due to the frictional heat generated is fitted with and pressed on the material 1 in a temperature condition of lower than a melting point.

In fact, verification experiments on tensile shear strength conducted by the inventor revealed that good tensile shear strength as many as 8.75 kN is obtained in a case where the upper material 1 is made of SS400 iron with thickness of 5 mm, the lower material 2 being made of 6000-series aluminum with thickness of 7 mm, the joint auxiliary material 3 being made of 6000-series aluminum which is the same kind with the material 2.

In the embodiment, the respective materials 1 and 2 are firmly joined together with no large projections such as a bolt and a nut unlike bolt-on fastening, so that there is no design restriction of ensuring occupation space required for such projections. Moreover, the auxiliary material 3 is tightly fitted into the joint holes 1a and 2a, so that there are no fears on loosening and dropout unlike bolt-on fastening.

In the embodiment illustrated, the flanges 6' and 6" are slightly protruded out of the upper and lower surfaces of the respective materials 1 and 2. Upon formation of the flanges 6' and 6", the upper and lower surfaces of the materials 1 and 2, respectively, may be countersunk to provide concaves contiguous with the joint holes 1a and 2a and having plane sections greater than the joint holes 1a and 2a such that the flanges 6' and 6" are fitted into the upper and lower countersunk concaves, respectively. This makes flat the final contour of the upper and lower surfaces of the materials 1 and 2, respectively.

Moreover, in the embodiment, the respective materials 1 and 2 are joined together through the auxiliary material 3 fitted into the joint holes 1a and 2a of the respective materials 1 and 2, which enables joining of the respective materials 1 and 2 widely ranging from thinner sheets to thicker plates without unreasonable pressing force and with frictional heat applied to the auxiliary material 3 by the joint tool 8 to soften the auxiliary material, so that quality defects such as cracks and deformation can be prevented from occurring.

The respective materials 1 and 2 are mechanically joined together through the engaging part without intermediate such as adhesive agent, so that the joining is free from aggravated workability and working environment unlike use of adhesive agent and has excellent recyclability since separation is readily performed upon recycling of the materials.

Thus, according to the above-mentioned embodiment, design restrictions can be substantially relieved since there are no large projections such as a bolt and a nut unlike bolt-on fastening and fears on loosening and dropout are released unlike bolt-on fastening. Moreover, joining is enabled over wide variety of materials widely ranging from thin sheets to thicker plates while preventing quality defects such as cracks and deformation from occurring. Further, joining can be made with excellent recyclability while maintaining workability and working environment good.

Exemplified in the embodiment illustrated in the above is the spiral groove 5 threaded on the inner periphery of the joint hole 1a; however, the groove 5 is not always limited to that formed spirally. For example, a combination of ring- and spline-shaped grooves 5 (or a combination of spiral and spline-shaped grooves 5) may attain the anti-dropout and anti-rotation effects without using the flanges 6' and 6". The respective materials 1 and 2 and the auxiliary material 3 may be of different kinds so as not to form a friction stir weld or joint 10 between them.

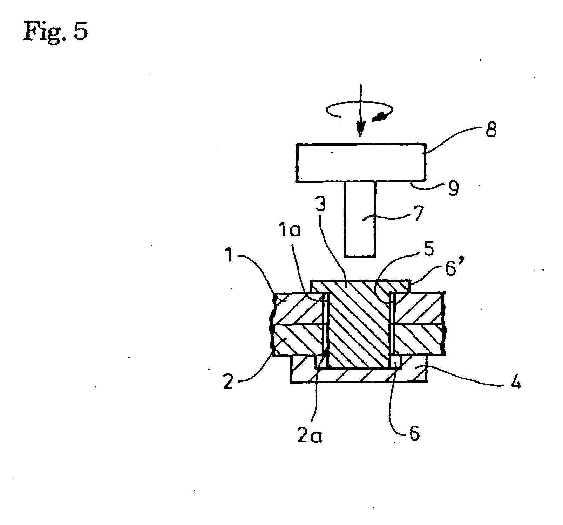

In the above embodiment, the flanges 6' and 6" formed on axially opposite ends of the auxiliary material 3 to pinchingly hold the respective materials 1 and 2 in an overlapped direction serves as engaging parts, these flanges 6' and 6" being concurrently formed upon immersion of the joint tool 8; alternatively, as shown in Fig. 5, the auxiliary material 3 with a flange 6" at its upper end in advance may be employed, only the flange 6" at the lower end being formed by the concave 6 on the backing member 4 upon immersion of the joint tool 8 and completed as engaging part.

When the auxiliary material 3 with the flange 6" at its upper end in advance is employed, the auxiliary material 3 may be manually set in the joint holes 1a and 2a before the joining device is installed, so that a device such as a feeder for locating the auxiliary material 3 in the joint holes 1a and 2a becomes unnecessary.

The above-mentioned embodiment is exemplified with the spot-like joint holes 1a and 2a formed on the materials 1 and 2, the joint tool 8 being aligned with the joining holes 1a and 2a so as to conduct spot joining; alternatively, the joining holes 1a and 2a may be formed in a slot form so as to conduct continuous joining by the joining tool 8 moved longitudinally of the joining holes 1a and 2a.

It is to be understood that a method for joining materials according to the invention is not limited to the above-mentioned embodiment and that various changes and modifications may be made without departing from the scope of the invention as defined by the claims. For example, the respective materials are not always different materials. The auxiliary material may be preliminarily formed with a guide bore for guiding immersion of a joint tool. The sectional configuration of the joint holes are not limited to rectangular as shown; the joint holes with various different sections may be appropriately employed so as to attain greater joint area for the purpose of improving strength.

### Reference Signs List

- 1: material
- 1a: joint hole
- 2: material
- 2a: joint hole
- 3: joint auxiliary material
- 5: groove
- 5': ridge (engaging part)
- 6': flange (engaging part)
- 6": flange (engaging part)
- 8: joint tool
- 10: friction stir weld

## Claims

1. A method for joining metal materials comprising overlapping the plural metal materials (1, 2) each with a joint hole (1a, 2a) so as to align the joint holes (1a, 2a), fitting joint auxiliary metal material (3) into said aligned joint holes (1a, 2a), rotating and pressing a joint tool (8) from one side in an overlapped direction of said respective metal materials (1, 2) onto the auxiliary metal material (3) to soften said auxiliary metal material (3) in solid phase through frictional heat generated so as to immerse the joint tool (8) into the auxiliary metal material (3), whereby the auxiliary metal material (3) is tightly fitted into the joint holes (1a, 2a) to provide a mechanical engaging part (5', 6', 6") for the respective metal materials (1, 2), extracting said joint tool (8), allowing said engaging part (5', 6', 6") to harden, whereby the respective metal materials (1, 2) are joined together through the auxiliary metal material (3), charaterised in that a ridge (5') formed on the auxiliary metal material (3) fitted with a groove (5) preliminarily formed on an inner side surface of the joint hole (1a, 2a) serves as engaging part.

2. A method for joining materials as claimed in claim 1,
wherein flanges (6', 6") formed on axially opposite ends of the auxiliary metal material (3) to pinchingly hold the respective metal materials (1, 2) in an overlapped direction serves as engaging parts, at least one of the flanges (6', 6") being formed upon immersion of the joint tool (8) and completed as engaging part.

3. A method for joining materials as claimed in any one of claims 1 or 2, wherein at least one of the respective metal materials (1, 2) is of the same kind as the auxiliary metal material (3), a boundary between the very material and the auxiliary metal material (3) being stirred by rotation of the joint tool (8) to provide a friction stir weld or joint (10).

4. A method for joining materials as claimed in any one of claims 1 to 3, wherein the joint holes (1a, 2a) formed into said respective materials (1, 2) are spot-like ; and the joint tool (8) is aligned with said joint holes (1a, 2a) to effect spot joining.

5. A method for joining materials as claimed in any one of claims 1 to 3, wherein the joint holes (1a, 2a) formed into said respective materials (1, 2) are slot-like ; and the joint tool (8) is moved longitudinally of said joint holes (1a, 2a) to effect continuous joining.

6. A method for joining metal materials comprising overlapping the plural metal materials (1, 2) each with a joint hole (1a, 2a) so as to align the joint holes (1a, 2a), fitting joint auxiliary metal material (3) into said aligned joint holes (1a, 2a), rotating and pressing a joint tool (8) from one side in an overlapped direction of said respective metal materials (1, 2) onto the auxiliary metal material (3) to soften said auxiliary metal material (3) in solid phase through frictional heat generated so as to immerse the joint tool (8) into the auxiliary metal material (3), whereby the auxiliary metal material (3) is tightly fitted into the joint holes (1a, 2a) to provide a mechanical engaging part (5', 6', 6") for the respective metal materials (1, 2), extracting said joint tool (8), allowing said engaging part (5', 6', 6") to harden, whereby the respective metal materials (1, 2) are joined together through the auxiliary metal material (3), **characterised in that** at least one of the respective metal materials (1, 2) is of the same kind as the auxiliary metal material (3), a boundary between the very metal material and the auxiliary metal material (3) being stirred by rotation of the joint tool (8) to provide a friction stir weld or joint (10).

7. A method for joining metal materials as claimed in claim 6,
wherein flanges (6', 6") formed on axially opposite ends of the auxiliary metal material (3) to pinchingly hold the respective metal materials (1, 2) in an overlapped direction serves as engaging parts, at least one of the flanges (6', 6") being formed upon immersion of the joint tool (8) and completed as engaging part.

8. A method for joining materials as claimed in any one of claims 6 or 7, wherein the joint holes (1a, 2a) formed into said respective materials (1, 2) are spot-like ; and the joint tool (8) is aligned with said joint holes (1a, 2a) to effect spot joining.

9. A method for joining materials as claimed in any one of claims 6 or 7, wherein the joint holes (1a, 2a) formed into said respective materials (1, 2) are slot-like ; and the joint tool (8) is moved longitudinally of said joint holes (1a, 2a) to effect continuous joining.

## Patentansprüche

1. Verfahren zum Verbinden von Metallmaterialien, das umfasst: Überlappen der mehreren Metallmaterialien (1, 2), wovon jedes ein Verbindungsloch (1a, 2a) besitzt, um die Verbindungslöcher (1a, 2a) aufeinander auszurichten, Einsetzen von Verbindungshilfsmetallmaterial (3) in die aufeinander ausgerichteten Verbindungslöcher (1a, 2a), Drehen und Pressen eines Verbindungswerkzeugs (8) von einer Seite in einer Überlappungsrichtung der jeweiligen Metallmaterialien (1, 2) gegen das Hilfsmetallmaterial (3), um das Hilfsmetallmaterial (3) in der festen Phase durch erzeugte Reibungswärme zu erweichen, um so das Verbindungswerkzeug (8) in das Hilfsmetallmaterial (3) einzutauchen, wodurch das Hilfsmetallmaterial (3) in die Verbindungslöcher (1a, 2a) eng eingepasst wird, um ein mechanisches Eingriffteil (5', 6', 6") für die jeweiligen Metallmaterialien (1, 2) zu schaffen, Herausziehen des Verbindungswerkzeugs (8) und Zulassen, dass das Eingriffteil (5', 6', 6") härtet, wodurch die jeweiligen Metallmaterialien (1, 2) mittels des Hilfsmetallmaterials (3) miteinander verbunden sind,
**dadurch gekennzeichnet, dass**
ein Steg (5'), der an dem Hilfsmetallmaterial (3) gebildet ist und in eine Nut (5), die vorher an einer inneren seitlichen Oberfläche des Verbindungslochs (1a, 2a) gebildet worden ist, eingepasst ist, als Eingriffteil dient.

2. Verfahren zum Verbinden von Materialien nach Anspruch 1,
wobei Flansche (6', 6"), die an axial gegenüberliegenden Enden des Hilfsmetallmaterials (3) gebildet sind, um die jeweiligen Metallmaterialien (1, 2) in einer Überlappungsrichtung klemmend zu halten, als Eingriffteile dienen, wobei wenigstens einer der Flansche (6', 6") bei einem Eintauchen des Verbindungswerkzeugs (8) gebildet und als Eingriffteil fertig gestellt wird.

3. Verfahren zum Verbinden von Materialien nach einem der Ansprüche 1 oder 2, wobei wenigstens eines der jeweiligen Metallmaterialien (1, 2) von derselben Art wie das Hilfsmetallmaterial (3) ist, wobei eine Grenze zwischen dem eigentlichen Material und dem Hilfsmetallmaterial (3) durch Drehen des Verbindungswerkzeugs (8) bewegt wird, um eine Reibungsbewegungsschweißnaht oder -verbindung (10) zu schaffen.

4. Verfahren zum Verbinden von Materialien nach einem der Ansprüche 1 bis 3, wobei die Verbindungslöcher (1a, 2a), die in den jeweiligen Materialien (1, 2) gebildet sind, punktförmig sind; und das Verbindungswerkzeug (8) auf die Verbindungslöcher (1a, 2a) ausgerichtet wird, um eine Punktverbindung zu bewerkstelligen.

5. Verfahren zum Verbinden von Materialien nach einem der Ansprüche 1 bis 3, wobei die Verbindungslöcher (1a, 2a), die in den jeweiligen Materialien (1, 2) gebildet werden, punktförmig sind; und das Verbindungswerkzeug (8) in Längsrichtung der Verbindungslöcher (1a, 2a) bewegt wird, um eine ununterbrochene Verbindung zu bewerkstelligen.

6. Verfahren zum Verbinden von Metallmaterialien, das umfasst: Überlappen der mehreren Metallmaterialien (1, 2), wovon jedes ein Verbindungsloch (1a, 2a) besitzt, um die Verbindungslöcher (1a, 2a) aufeinander auszurichten, Einsetzen von Verbindungshilfsmetallmaterial (3) in die aufeinander ausgerichteten Verbindungslöcher (1a, 2a), Drehen und Pressen eines Verbindungswerkzeugs (8) von einer Seite in einer Überlappungsrichtung der jeweiligen Metallmaterialien (1, 2) gegen das Hilfsmetallmaterial (3), um das Hilfsmetallmaterial (3) in der festen Phase mittels erzeugter Reibungswärme zu erweichen, um das Verbindungswerkzeug (8) in das Hilfsmetallmaterial (3) einzutauchen, wodurch das Hilfsmetallmaterial (3) in die Verbindungslöcher (1a, 2a) eng eingepasst wird, um einen mechanischen Eingriffteil (5', 6', 6") für die jeweiligen Metallmaterialien (1, 2) zu schaffen, Herausziehen des Verbindungswerkzeugs (8) und Zulassen, dass das Eingriffteil (5', 6', 6") härtet, wodurch die jeweiligen Metallmaterialien (1, 2) mittels des Hilfsmetallmaterials (3) miteinander verbunden werden,
**dadurch gekennzeichnet, dass**
wenigstens eines der jeweiligen Metallmaterialien (1,2) von derselben Art wie das Hilfsmetallmaterial (3) ist, wobei eine Grenzfläche zwischen dem eigentlichen Metallmaterial und dem Hilfsmetallmaterial (3) durch Drehen des Verbindungswerkzeugs (8) verrührt wird, um eine Reibungsbewegungsschweißnaht oder -verbindung (10) zu schaffen.

7. Verfahren zum Verbinden von Metallmaterialen nach Anspruch 6,
wobei Flansche (6', 6"), die an axial gegenüberliegenden Enden des Hilfsmetallmaterials (3) gebildet sind, um die jeweiligen Metallmaterialien (1, 2) in einer Überlappungsrichtung klemmend zu halten, als Eingriffteile dienen, wobei wenigstens einer der Flansche (6', 6") bei dem Eintauchen des Verbindungswerkzeugs (8) gebildet wird und als Eingriffteil fertig gestellt wird.

8. Verfahren zum Verbinden von Materialien nach einem der Ansprüche 6 oder 7, wobei die Verbindungslöcher (1a, 2a), die in den jeweiligen Materialien (1, 2) gebildet sind, punktartig sind; und das Verbindungswerkzeug (8) auf die Verbindungslöcher (1a, 2a) ausgerichtet wird, um eine Punktverbindung zu bewerkstelligen.

9. Verfahren zum Verbinden von Materialien nach einem der Ansprüche 6 oder 7, wobei die Verbindungslöcher (1a, 2a), die in den jeweiligen Materialien (1, 2) gebildet werden, punktartig sind; und das Verbindungswerkzeug (8) in Längsrichtung der Verbindungslöcher (1a, 2a) bewegt wird, um eine ununterbrochene Verbindung zu bewerkstelligen.

## Revendications

1. Procédé de jonction de matériaux métalliques comprenant la superposition de la pluralité de matériaux métalliques (1, 2), chacun comportant un trou de jonction (1a, 2a), de manière à aligner les trous de jonction (1a, 2a), l'insertion d'un matériau métallique auxiliaire de jonction (3) dans lesdits trous de jonction (1a, 2a) alignés, la rotation et la pression d'un outil de jonction (8) à partir d'un côté dans une direction de superposition desdits matériaux métalliques (1, 2) respectifs sur le matériau métallique auxiliaire (3) pour ramollir ledit matériau métallique auxiliaire (3) en phase solide par la chaleur de frottement générée de manière à immerger l'outil de jonction (8) dans le matériau métallique auxiliaire (3), moyennant quoi le matériau métallique auxiliaire (3) est inséré étroitement dans les trous de jonction (1a, 2a) pour réaliser une partie de mise en prise mécanique (5', 6', 6") pour les matériaux métalliques (1, 2) respectifs, l'extraction dudit outil de jonction (8), la solidification de ladite partie de mise en prise (5', 6', 6"), moyennant quoi les matériaux métalliques (1, 2) respectifs sont joints les uns aux autres par l'intermédiaire du matériau métallique auxiliaire (3), **caractérisé en ce que**
une nervure (5') formée sur le matériau métallique auxiliaire (3) assemblée à une rainure (5) formée au préalable sur une surface côté intérieur du trou de jonction (1 a, 2a) sert de partie de mise en prise.

2. Procédé de jonction de matériaux selon la revendication 1,
dans lequel des rebords (6', 6") formés sur les extrémités axialement opposées du matériau métallique auxiliaire (3) pour maintenir par pincement les matériaux métalliques (1, 2) respectifs dans une direction de superposition servent de parties de mise en prise, au moins l'un des rebords (6', 6") étant formé lors de l'immersion de l'outil de jonction (8) et achevé en tant que partie de mise en prise.

3. Procédé de jonction de matériaux selon l'une quelconque des revendications 1 et 2, dans lequel au moins l'un des matériaux métalliques (1, 2) respectifs est du même type que le matériau métallique auxiliaire (3), une frontière entre ce même matériau et le matériau métallique auxiliaire (3) étant agitée par la rotation de l'outil de jonction (8) pour réaliser une soudure ou une jonction par agitation par frottement (10).

4. Procédé de jonction de matériaux selon l'une quelconque des revendications 1 à 3, dans lequel les trous de jonction (1 a, 2a) formés dans lesdits matériaux (1, 2) respectifs sont en forme de points ; et l'outil de jonction (8) est aligné avec lesdits trous de jonction (1 a, 2a) pour effectuer une jonction par points.

5. Procédé de jonction de matériaux selon l'une quelconque des revendications 1 à 3, dans lequel les trous de jonction (1 a, 2a) formés dans lesdits matériaux (1, 2) respectifs sont en forme de fentes ; et l'outil de jonction (8) est déplacé longitudinalement auxdits trous de jonction (1a, 2a) pour effectuer une jonction continue.

6. Procédé de jonction de matériaux métalliques comprenant la superposition de la pluralité de matériaux métalliques (1, 2), chacun comportant un trou de jonction (1a, 2a), de manière à aligner les trous de jonction (1a, 2a), l'insertion d'un matériau métallique auxiliaire de jonction (3) dans lesdits trous de jonction (1a, 2a) alignés, la rotation et la pression d'un outil de jonction (8) à partir d'un côté dans une direction de superposition desdits matériaux métalliques (1, 2) respectifs sur le matériau métallique auxiliaire (3) pour ramollir ledit matériau métallique auxiliaire (3) en phase solide par la chaleur de frottement générée de manière à immerger l'outil de jonction (8) dans le matériau métallique auxiliaire (3), moyennant quoi le matériau métallique auxiliaire (3) est inséré étroitement dans les trous de jonction (1a, 2a) pour réaliser une partie de mise en prise mécanique (5', 6', 6") pour les matériaux métalliques (1, 2) respectifs, l'extraction dudit outil de jonction (8), la solidification de ladite partie de mise en prise (5', 6', 6"), moyennant quoi les matériaux métalliques (1, 2) respectifs sont joints les uns aux autres par l'intermédiaire du matériau métallique auxiliaire (3), **caractérisé en ce que** au moins l'un des matériaux métalliques (1, 2) respectifs est du même type que le matériau métallique auxiliaire (3), une frontière entre ce même matériau métallique et le matériau métallique auxiliaire (3) étant agitée par la rotation de l'outil de jonction (8) pour réaliser une soudure ou une jonction par agitation par frottement (10).

7. Procédé de jonction de matériaux métalliques selon la revendication 6, dans lequel des rebords (6', 6") formés sur les extrémités axialement opposées du matériau métallique auxiliaire (3) pour maintenir par pincement les matériaux métalliques (1, 2) respectifs dans une direction de superposition servent de parties de mise en prise, au moins l'un des rebords (6', 6") étant formé lors de l'immersion de l'outil de jonction (8) et achevé en tant que partie de mise en prise.

8. Procédé de jonction de matériaux selon l'une quelconque des revendications 6 et 7, dans lequel les trous de jonction (1a, 2a) formés dans lesdits matériaux (1, 2) respectifs sont en forme de points ; et l'outil de jonction (8) est aligné avec lesdits trous de jonction (1a, 2a) pour effectuer une jonction par points.

9. Procédé de jonction de matériaux selon l'une quelconque des revendications 6 et 7, dans lequel les trous de jonction (1a, 2a) formés dans lesdits matériaux (1, 2) respectifs sont en forme de fentes ; et l'outil de jonction (8) est déplacé longitudinalement auxdits trous de jonction (1 a, 2a) pour effectuer une jonction continue.
